# EUROPÄISCHE PATENTSCHRIFT

(11) **EP 4 371 771 B1**
(45) Veröffentlichungstag und Bekanntmachung des Hinweises auf die Patenterteilung: **30.07.2025**
(21) Anmeldenummer: 22207611.9
(22) Anmeldetag: 15.11.2022
(51) Int. Cl.: B32B 37/12, H02K 15/02, B32B 7/06, B32B 7/12

(54) **KLEBPAKETIEREN VON ROTOR- UND STATORPAKETEN**
ADHESIVE BONDING OF ROTOR AND STATOR ASSEMBLIES
EMPILAGE PAR COLLAGE DE PAQUETS DE ROTOR ET DE STATOR

(43) Veröffentlichungstag der Anmeldung: 22.05.2024
(73) Patentinhaber: Universität Kassel, 34125 Kassel (DE)
(72) Erfinder: Böhm, Stefan, 34125 Kassel (DE); Kahlmeyer, Martin, 34125 Kassel (DE); Winkel, Andreas, 34125 Kassel (DE)
(74) Vertreter: Durm Patentanwälte PartG mbB

(56) Entgegenhaltungen:
- DE-A1- 102012 001 744
- DE-A1- 102016 225 853

## Beschreibung

Die vorliegende Erfindung betrifft eine Vorrichtung zum Verbinden von Blechen.

Die vorliegende Erfindung betrifft weiterhin ein System zum Verbinden von Blechen, sowie ein Verfahren zum Verbinden von Blechen.

Aufgrund der technologischen Entwicklung und vor dem Hintergrund politischer Vorgaben hat die Elektromobilität in den letzten Jahren immer mehr an Bedeutung gewonnen. Sowohl in der Produktion von Fahrzeugen (Autos, Lastwagen, Motorräder, aber auch Fahrräder etc.), als auch in anderen Bereichen, ist neben der Entwicklung und Herstellung von Batterien auch der Herstellungsprozess von Elektromotoren ein hochrelevanter Faktor.

Die in einem Rotor oder Stator eines Elektromotors enthaltenen Lamellenpakete umfassen eine Vielzahl an dünnen Blechen (auch als Elektrobleche bezeichnet). Diese Elektrobleche weisen hervorragende Eigenschaften bei der Leitung und Verstärkung von Magnetfeldern auf, wobei die Zusammensetzung und Spannungsfreiheit der Bleche sowie auch deren Isolation gegenüber einander die Effizienz des Elektromotors beeinflussen. Bei der Herstellung von Rotoren und Statoren für Elektromotoren versteht man unter dem Begriff der Paketierung das Fügen einzelner Bleche zu einem Blechpaket. Ein Blechpaket ist dabei insbesondere ein geordneter Stapel einer Mehrzahl von Blechen, die miteinander verbunden sind. Ein derartiges Blechpaket ersetzt einen massiven Eisenkern und kann zu leistungsfähigeren Elektromotoren führen.

Bei der Herstellung von Blechpaketen wird dabei vornehmlich das sogenannte Stanzpaketieren eingesetzt. Die Bleche werden in einem Stanzprozess aus einem Rohmaterial, das beispielsweise auf einer Rolle geliefert wird, ausgestanzt, auf einem Stapel abgelegt und dann miteinander verbunden. Für das Verbinden werden unterschiedliche Verfahren eingesetzt. Zum einen können Schweißverfahren verwendet werden, wobei Schweißnähte angebracht werden, um einzelne Bleche zu verbinden. Ebenfalls ist ein Verbinden durch Klebstoff oder in anderer Weise möglich.

In diesem Zusammenhang wird in EP 3 353 241 B1 eine thermisch aktivierbare, schnell härtende Klebstoffbeschichtung offenbart. Beschrieben wird insbesondere eine Klebstoffzusammensetzung zur Verwendung in einem Verfahren zur Herstellung eines Blechpakets aus miteinander verklebten Blechbauteilen. Die Zusammensetzung enthält eine wässrige Dispersion, enthaltend 100 Gewichtsteile eines Epoxidharzes, vier bis acht Gewichtsteile eines latenten Härters und vier bis zehn Gewichtsteile eines latenten Beschleunigers.

In DE 10 2012 001 744 A1 wird ein Verfahren zur Herstellung eines aus mehreren aufeinander gestapelten Elektroblechen erzeugten Blechpakets offenbart. In einer Vorrichtung wird ein an dem Elektroblech aufgebrachter Klebstoff unter dem Einfluss von Wärme aktiviert und das Elektroblech unter dem Einfluss von Wärme und Druck mit dem Blechpaket verbunden. Zudem wird das Elektroblech unmittelbar vor dem Stapeln oder beim Stapeln aus einem Blechband gestanzt.

In DE 10 2016 225 853 A1 werden ein Verfahren sowie eine Vorrichtung zur Herstellung eines Blechpakets aus mehreren, zumindest einseitig und vollflächig mit einer Schicht aus Klebstoff versehenen Einzelblechen offenbart. Die Einzelbleche werden zueinander ausgerichtet gestapelt und unter Einwirkung eines Druckes mittels der Schicht aus miteinander verbunden. Die Vorrichtung weist eine Stanze, einen Druckstempel und eine Aktiviereinheit für Klebstoff auf. Die Aktivierung der auf dem Einzelblech vorhandenen, vollflächig aufgebrachten Schicht erfolgt lediglich in Teilbereichen dieser Schicht. Im Bereich an oder innerhalb der Aktiviereinheit ist eine Maske angeordnet. Alternativ weist die Vorrichtung im Bereich oder innerhalb der Aktiviereinheit eine Maske auf. Die Vorrichtung umfasst eine Klebstoffapplikationseinheit zum Aufbringen des Klebstoffes auf das Blechband und/oder eine Trocknungseinheit zum Austreiben des Lösemittels aus dem Klebstoff.

Nachteilig an bisherigen Ansätzen ist in diesem Zusammenhang, dass für das Verkleben eine vergleichsweise aufwendige Prozesstechnik erforderlich ist, die zum einen zu höheren Kosten führt und zum anderen auch die Flexibilität verringert. So ist oft eine Applikation des Klebstoffes als Dispersion durch den Hersteller des Blechpakets nicht oder nicht effizient realisierbar, da unter anderem die notwendige Verdunstung des Wassers die Prozesszeiten erheblich verlängert. Dies bedingt, dass die Bleche regelmäßig bereits beim Stahllieferanten mit reaktiven Klebstoffen beschichtet werden und vom Hersteller des Blechpakets bereits in vorverarbeiteter und insbesondere vorbeschichteter Form zugekauft werden. Dies wiederum führt oft dazu, dass die Flexibilität, beispielsweise hinsichtlich einer unterschiedlichen Beschichtung einer Ober- und Unterseite, eingeschränkt ist.

Ausgehend hiervon stellt sich die vorliegende Erfindung die Aufgabe, einen Ansatz zum Verbinden von Blechen bereitzustellen, bei dem eine flexible und kostengünstig umsetzbare Prozesstechnik ermöglicht wird. Insbesondere soll eine im Vergleich zu bisherigen Ansätzen schnellere Verarbeitung ermöglicht werden. Dies soll eine effiziente Herstellung von Blechpaketen in möglichst weitreichender Unabhängigkeit von Zulieferern erlauben.

Zum Lösen dieser Aufgabe betrifft die vorliegende Erfindung in einem ersten Aspekt eine Vorrichtung zum Verbinden von Blechen, mit
- einer Zuführungseinheit zum Zuführen eines Blechs und eines Trägermaterials mit einem voraufgebrachten Klebstofffilm in einem thermoplastisch-festen Zustand;
- einer Verbindungseinheit zum Verbinden des Blechs mit dem Trägermaterial mittels des Klebstofffilms durch Überführen des Klebstofffilms in einen thermoplastisch-haftenden Zustand und Aufpressen des Trägermaterials und des Klebstofffilms auf das Blech;
- eine Ablöseeinheit zum Ablösen des Trägermaterials von dem Blech, wobei der Klebstofffilm auf dem Blech in einem thermoplastisch-festen Zustand verbleibt;
- einer Stanzeinheit zum Stanzen des klebstofffilmbehafteten Blechs in eine vordefinierte Blechform;
- einer Aktivierungseinheit zum Aktivieren des Klebstofffilms auf der Blechform;
- einer Presseinheit zum Verbinden mehrerer Blechformen zum Herstellen eines Blechpakets durch Verpressen.

In einem weiteren Aspekt betrifft die vorliegende Erfindung ein System zum Verbinden von Blechen, mit einer Vorrichtung wie zuvor beschrieben, einem Blech und einem Trägermaterial mit einem voraufgebrachten Klebstofffilm.

Weitere Aspekte der Erfindung betreffen ein entsprechend der Vorrichtung ausgebildetes Verfahren zum Verbinden von Blechen sowie einen Elektromotor mit einem Stator und/oder Rotor, der ein nach dem Verfahren hergestelltes Blechpaket umfasst.

Bevorzugte Ausgestaltungen der Erfindung werden in den abhängigen Ansprüchen beschrieben.

Erfindungsgemäß wird ein Blech sowie ein Trägermaterial mit einem voraufgebrachten Klebstofffilm zugeführt beziehungsweise empfangen. In einem ersten Prozessschritt wird das Blech mit dem Trägermaterial verbunden, wobei der Klebstofffilm zum Herstellen der Verbindung zwischen Blech und Trägermaterial in einen thermoplastisch-haftenden Zustand überführt und das Trägermaterial auf das Blech gepresst wird. Anschließend wird das Trägermaterial abgelöst, sodass der Klebstofffilm auf dem Blech verbleibt. Dabei geht der Klebstofffilm wieder in einen thermoplastisch-festen Zustand über. Das klebstofffilmbehaftete Blech kann dann in eine vordefinierte Blechform gestanzt werden. Nach dem Stanzvorgang kann eine Aktivierung des Klebstofffilms auf der gestanzten Blechform erfolgen und ein Verpressen mehrerer Blechformen eingesetzt werden, um die mehreren Blechformen zu einem Blechpaket zu verbinden, wobei der Klebstofffilm vorzugsweise in einen duromeren-festen Zustand übergeht bzw. überführt wird. Ein solcher Zustand bewirkt insbesondere eine thermische und mediale Beständigkeit, was beispielsweise für Anwendungen im Elektromotor essentiell ist.

Im Gegensatz zu bisherigen Ansätzen wird die Verbindung zwischen Blech und Klebstofffilm direkt vor der weiteren Verarbeitung und dem Stanzen hergestellt. Hierbei wird ein Klebstofffilm in einen thermoplastisch-haftenden Zustand (tackiger bzw. klebriger Zustand) überführt und auf ein Blech aufgebracht, ohne aktiviert zu werden. Im Anschluss daran liegt der Klebstoff in einem thermoplastisch-festen Zustand vor. Durch diese Verbindung wird eine ausreichende Festigkeit für ein Stanzen erreicht, ohne dass es zu einer unvorteilhaften Sprödigkeit kommt. Die eigentliche Aktivierung des Klebstoffs erfolgt - sofern notwendig -erst nach dem Stanzvorgang und direkt vor dem Pressen zum Herstellen des Blechpakets.

Ein Vorteil dieses Ansatzes liegt dabei darin, dass der Klebstoff nicht als Dispersion auf das Blech übertragen werden muss, sodass die Produktivität durch reduzierte Prozesszeiten (insbesondere wegen nicht notwendiger Verdunstungszeit des in einer Dispersion enthaltenen Wassers) gesteigert werden kann. Dass keine Dispersion verwendet werden muss vereinfacht bzw. ermöglicht auch das Auftragen von - gegebenenfalls unterschiedlichen - Klebstoffen auf die Ober- und Unterseite. Weiterhin wird eine Lieferanten- beziehungsweise Produktunabhängigkeit erreicht, da das Aufbringen des Klebstofffilms wesentlich beschleunigt und vereinfacht wird. Beispielsweise kann im Sinne einer kompakten Fertigungsstraße die Klebstoffapplikation unmittelbar vor der Stanz- und Paketieranlage vorgesehen sein. Insoweit ist es möglich, Bleche mit und ohne zusätzliche Isolationsschichten bzw. mit/ohne Konservierungs- bzw. Korrosionsschutzschichten zu verarbeiten. Dadurch, dass der Klebstoff erst unmittelbar vor dem Stanzvorgang auf die Bleche beziehungsweise auf die Bandstahlrollen (Coils) aufgebracht werden muss, kann eine längere Lagerbarkeit dieser Bandstahlrollen erreicht werden. Gegebenenfalls ist keine gekühlte Lagerung eines (reaktiven) Klebstofffilms erforderlich im Vergleich zu einer Lagerung von Bandstahlrollen mit aktiviertem Klebstoff. Vorteilhaft ist weiterhin, dass große Lasten auf dem Klebstoff (Blechcoil mit mehreren Tonnen), die die Klebrigkeit eines ansonsten "festen" Klebstofffilms provozieren und so ein "Abwickeln" des Coils erschweren können, vermieden werden. Des Weiteren kann eine Flexibilität in der Wahl der Klebstoffchemie und auch der eingesetzten Schichtdicken (bspw. Ober- und Unterseite) erreicht werden. Sofern der Klebstoff die Anforderungen an die thermische und mediale Beständigkeit des Endprodukts erfüllt, kann beispielsweise auch ein nichtreaktiver Schmelzklebstofffilm eingesetzt werden. Zuletzt ist eine Verlängerung eines Blechs, beispielsweise beim Wechsel einer Bandstahlrolle, möglich, da diese direkt vor der Beschichtung erfolgen kann, sodass die Beschichtung nicht beeinträchtigt wird.

Im Gegensatz zum Stand der Technik erfolgt also keine Vorbeschichtung des Blechs, sondern eine direkte Applikation des Klebstoffs auf das Trägermaterial vor der Weiterverarbeitung. Das Trägermaterial erhöht dabei die Stabilität eines dünnen Klebstofffilms. Es wird ermöglicht, dass durch das Trägermaterial eine Verschmutzung von Wellen durch Anhaften eines Klebstofffilms vermieden wird. Die Verarbeitung von Mehrfachblechen kann vereinfacht werden.

In einer bevorzugten Ausgestaltung umfasst die Vorrichtung eine weitere Zuführungseinheit und eine weitere Verbindungseinheit zum Zuführen und Verbinden eines weiteren Blechs und eines weiteren Trägermaterials mit einem vorher aufgebrachten weiteren Klebstofffilm. Weiterhin umfasst die Vorrichtung eine Blechverbindungseinheit zum Verbinden des klebstofffilmbehafteten Blechs mit dem weiteren Blech und dem damit verbundenen weiteren Trägermaterial mittels des weiteren Klebstofffilms zu einem Mehrfachblech. Weiterhin umfasst die Vorrichtung eine weitere Ablöseeinheit zum Ablösen des weiteren Trägermaterials von dem Mehrfachblech, wobei der weitere Klebstofffilm in einem thermoplastisch-festen Zustand auf dem Mehrfachblech verbleibt. Dabei ist die Stanzeinheit zum Stanzen des klebstofffilmbehafteten Mehrfachblechs in die vordefinierte Blechform ausgebildet. Es wird mit anderen Worten also ermöglicht, dass noch vor dem Stanzvorgang mehrere Bleche verbunden werden und ein Mehrfachblech erzeugt wird. Die Blechverbindungseinheit dient zum Aufeinanderschichten beziehungsweise Verbinden mehrerer Bleche und der dazwischenliegenden Klebstofffilme. Dabei wird der Klebstofffilm zwischen den Blechen in einen thermoplastisch-haftenden Zustand überführt, sodass die Bleche mit ausreichender Festigkeit für die Verarbeitung verbunden sind. Die unterste beziehungsweise oberste Schicht bleibt durch das Trägermaterial abgedeckt, um ein Anhaften des Klebstofffilms an Wellen beziehungsweise Walzen der Verbindungseinheit und der Ablöseeinheit zu vermeiden. Direkt vor dem Stanzen wird auch das Trägermaterial am untersten beziehungsweise obersten Blech des Mehrfachblechs abgelöst. In der Stanzeinheit werden dann die mehreren Schichten beziehungsweise das Mehrfachblech in einem Stanzvorgang gestanzt. Durch eine Verbindung mehrerer Mehrfachbleche kann ein entsprechendes Blechpaket effizienter hergestellt werden. Insoweit ermöglicht die vorliegende Erfindung auch eine Herstellung eines Zwei- oder Mehrblechverbunds in-situ direkt vor dem Stanzvorgang.

Es versteht sich, dass durch die Verwendung weiterer entsprechender Einheiten auch eine Verbindung von mehr als zwei Blechen erfolgen kann. Beispielsweise können drei, vier oder fünf Bleche zu einem Mehrfachblech verbunden werden. Die entsprechenden Einheiten werden dabei hintereinandergeschaltet. Es ergibt sich eine weiter verbesserte Effizienz sowie eine weiter erhöhte Flexibilität. Zudem wird eine verbesserte Skalier- bzw. Erweiterbarkeit erreicht.

In einer bevorzugten Ausgestaltung umfasst die Verbindungseinheit einen Kalander, vorzugsweise einen Kalander mit beheizbarer Walze, und/oder eine Erwärmungseinheit zum Erwärmen des Klebstofffilms. Ein Kalander, also ein System aus mehreren Walzen, ermöglicht dabei eine Verarbeitung von Bandstahlrollen. Insbesondere wird eine effiziente Verbindung des Blechs mit dem Trägermaterial ermöglicht. Beispielsweise kann der Klebstofffilm durch Aufpressen in den thermoplastisch-haftenden Zustand überführt werden. Direkt nach Wegnahme des Drucks kann der Klebstofffilm dann wieder in den thermoplastischen-festen Zustand zurückgehen und das Trägermaterial abgelöst werden. Eine effiziente, kontinuierliche Verarbeitung kann erreicht werden.

In einer bevorzugten Ausgestaltung ist die Verbindungseinheit zum Verbinden des Blechs mit dem Trägermaterial durch Erwärmen des Klebstofffilms auf eine Temperatur, die unterhalb einer Aktivierungstemperatur des Klebstofffilms liegt, ausgebildet. Dadurch, dass es beim Verbinden des Blechs mit dem Trägermaterial beziehungsweise beim Aufbringen des Klebstofffilms auf das Blech nicht zu einer Aktivierung des Klebstofffilms kommt, kann diese nach dem Aufbringen wieder in einen thermoplastisch-festen Zustand überführt werden beziehungsweise übergehen, sodass eine weitere Verarbeitung ermöglicht wird. Insbesondere kann im Stanzprozess ohne eine Verschmutzung der Maschine gearbeitet werden. Eine Aktivierung des Klebstofffilms erfolgt erst nach dem Stanzen und direkt vor dem Verbinden der Bleche in der Presseinheit.

In einer bevorzugten Ausgestaltung ist die Stanzeinheit zum Stanzen des klebstofffilmbehafteten Blechs oder des klebstofffilmbehafteten Mehrfachblechs in eine Form eines Statorblechs oder eines Rotorblechs ausgebildet. Die Presseinheit ist zum Verbinden mehrerer Blechformen zu einem Rotor- oder Statorblechpaket für einen Elektromotor ausgebildet. Insbesondere kann ein Stanzen direkt in eine entsprechende Form eines Rotors oder eines Stators erfolgen. Dies ermöglicht eine effiziente Herstellung von Elektromotoren mit der zuvor beschriebenen Vorrichtung beziehungsweise mit dem erfindungsgemäßen Verfahren.

In einer bevorzugten Ausgestaltung ist die Aktivierungseinheit zum Aktivieren des Klebstofffilms durch Erwärmen, insbesondere durch Infrarotstrahlung, Induktion, Heißluft, resistive Erwärmung, Mikrowellen oder dielektrische Erwärmung ausgebildet. Zusätzlich oder alternativ ist die Aktivierungseinheit zum Aktivieren des Klebstofffilms durch Licht, insbesondere UV-Licht, oder Laserstrahlen ausgebildet. In Abhängigkeit der Klebstoffchemie können unterschiedliche Aktivierungsverfahren eingesetzt werden. Die Aktivierung erfolgt dabei direkt vor dem Pressvorgang und nach dem Stanzen. Durch die unterschiedlich einsetzbaren Ansätze zum Aktivieren des Klebstofffilms kann eine entsprechende Anpassung je nach verwendeter Klebstoffchemie beziehungsweise je nach benötigten Eigenschaften erfolgen.

In einer bevorzugten Ausgestaltung umfasst die Stanzeinheit ein Stanzfolgewerkzeug zum Stanzen des klebstofffilmbehafteten Blechs oder des klebstofffilmbehafteten Mehrfachblechs in mehreren Schritten. Ein Stanzfolgewerkzeug ermöglicht dabei ein Stanzen in mehreren Schritten, wobei jeweils einzelne Teile ab- oder ausgestanzt werden, um die benötigte Form (Blechform) in mehreren Schritten herzustellen. Es ergibt sich eine schnelle Verarbeitbarkeit und damit eine höhere Prozessgeschwindigkeit.

In einer bevorzugten Ausgestaltung umfasst die Zuführungseinheit und/oder die weitere Zuführungseinheit eine erste Aufnahme für eine Blechrolle mit gewickeltem Blech. Zusätzlich oder alternativ umfasst die Zuführungseinheit und/oder die weitere Zuführungseinheit eine zweite Aufnahme für eine Trägerrolle mit gewickeltem Trägermaterial mit voraufgebrachtem Klebstofffilm. Die Verarbeitung von Blech in Form einer gewickelten Blechrolle (auch als Bandstahlrolle oder Coil bezeichnet) ermöglicht eine effiziente Zulieferung des Materials. Insbesondere ist es möglich, dass das Material in Form eines Standardmaterials beschafft wird, und damit eine Herstellerunabhängigkeit sowie eine Kostenreduktion ermöglicht werden. Die entsprechende Verwendung eines gewickelten Trägermaterials mit voraufgebrachtem Klebstofffilm kann dabei zu einer herstellerunabhängigen Zulieferung des Klebstoffs führen. Zudem ist es möglich, eine Variabilität in der Klebstoffchemie zu erreichen. Es ergibt sich eine effiziente Verarbeitung.

In einer bevorzugten Ausgestaltung ist die Zuführungseinheit und/oder die weitere Zuführungseinheit zum Zuführen eines Papiers mit Silikonbeschichtung, einer Kunststofffolie, insbesondere einer textilverstärkten Kunststofffolie, oder einer Metallfolie, insbesondere einer silikonisierten Metallfolie, als Trägermaterial ausgebildet. Die Verwendung unterschiedlicher Trägermaterialien hat dabei je nach Klebstoffchemie unterschiedliche Vorteile. Insbesondere kann durch ein robustes Trägermaterial ein verbessertes Ablösen des Trägermaterials von dem Blech beziehungsweise von dem Klebstofffilm im thermoplastisch-festen Zustand erreicht werden.

In einer bevorzugten Ausgestaltung ist die Zuführungseinheit und/oder die weitere Zuführungseinheit zum Zuführen eines Trägermaterials mit einem Klebstofffilm aus nachvernetzendem und/oder latent härtendem Klebstoff, insbesondere einem Epoxidharz, ausgebildet. Die Verwendung eines derartigen Klebstofffilms ermöglicht eine effiziente Verarbeitung durch eine Herstellbarkeit eines thermoplastisch-haftenden Zustands und eines duromeren-festen Zustands nach Aktivierung. Zudem gibt es verschiedene Klebstofffilme beziehungsweise verschiedene Materialien, die derartige Eigenschaften aufweisen.

In einer bevorzugten Ausgestaltung ist die Zuführungseinheit und/oder die weitere Zuführungseinheit zum Zuführen eines Elektroblechs für ein Rotor- und/oder Statorblechpaket eines Elektromotors ausgebildet. Je nach verwendetem Material des Elektroblechs können unterschiedliche Eigenschaften des Rotor- und/oder Statorblechpakets beeinflusst werden. Insbesondere gibt es spezifische Elektrobleche, die für bestimmte Anwendungen relevante Eigenschaften aufweisen. Die erfindungsgemäße Vorrichtung beziehungsweise das erfindungsgemäße Verfahren ermöglicht dabei eine große Flexibilität.

Unter einem Blech versteht sich hierin insbesondere ein Elektroblech, also ein dünnes Blech mit guten Leitungs- und Verstärkungseigenschaften hinsichtlich elektrischer und magnetischer Felder. Das Blech kann eine oder mehrere Isolierschichten umfassen. Es ist aber auch möglich, das erfindungsgemäße Verfahren für andere Blecharten einzusetzen. Ein Klebstofffilm ist hierin insbesondere ein Film aus einem Klebstoff, der nicht als Dispersion aufgetragen werden muss. Das Trägermaterial kann auch als Träger oder Liner bezeichnet werden. Unter einem haftenden Zustand wird ein tackiger beziehungsweise klebriger Zustand verstanden, in dem der Klebstoff nicht aktiviert ist, aber dennoch eine Klebekraft entfaltet. Der Klebstofffilm kann insbesondere ein nachvernetzendes beziehungsweise latent härtendes oder reagierendes System umfassen. Unter einer Blechform versteht sich ein separiertes Stück Blech beziehungsweise ein separiertes Stück eines Mehrfachblechs mit einer vorgegebenen Form.

Die Erfindung wird nachfolgend anhand einiger ausgewählter Ausführungsbeispiele im Zusammenhang mit den beiliegenden Zeichnungen näher beschriebenen und erläutert. Es zeigen
- Figur 1: eine schematische Darstellung eines erfindungsgemäßen Systems zum Verbinden von Blechen;
- Figur 2: eine schematische Darstellung einer erfindungsgemäßen Vorrichtung zum Verbinden von Blechen;
- Figur 3: eine schematische Darstellung eines Blechs mit einem damit mittels eines Klebstofffilms verbundenen Trägermaterial sowie ein Mehrfachblech umfassend zwei Bleche;
- Figur 4: eine schematische Darstellung des Ablösens des Trägermaterials von dem Blech; und
- Figur 5: eine schematische Darstellung eines erfindungsgemäßen Verfahrens zum Verbinden von Blechen.

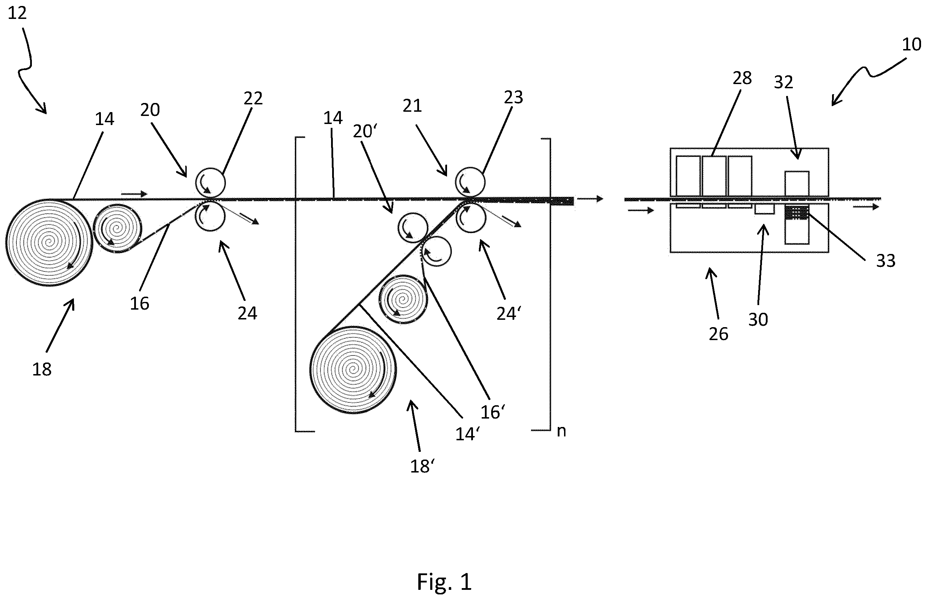

In der Figur 1 ist schematisch eine Ausführungsform eines erfindungsgemäßen Systems 10 zum Verbinden von Blechen dargestellt. Das System 10 umfasst eine Vorrichtung 12 zum Verbinden von Blechen sowie ein Blech 14 und ein Trägermaterial 16 mit einem darauf voraufgebrachten Klebstofffilm.

Im dargestellten Ausführungsbeispiel erfolgt dabei die Zuführung des Blechs 14 und des Trägermaterials 16 in Form von Rollen (Coils). Das Trägermaterial 16 umfasst einen darauf voraufgebrachten Klebstofffilm. In einem ersten Prozessschritt nach der Zuführung des Blechs 14 und des Trägermaterials 16 in die Zuführungseinheit 18, wird das Blech 14 mit dem Trägermaterial 16 (und dem Klebstofffilm) in der Verbindungseinheit 20 verbunden. Hierzu umfasst die Verbindungseinheit 20 im dargestellten Ausführungsbeispiel einen Kalander 22. Nach Durchlaufen des Kalanders 22 wird das Trägermaterial 16 mittels der Ablöseeinheit 24 vom Blech 14 abgelöst, wonach der Klebstofffilm auf dem Blech 14 in einem thermoplastisch-festen Zustand verbleibt.

Nachfolgend wird im dargestellten Ausführungsbeispiel das Blech 14 mit einem weiteren Blech 14' beziehungsweise einem weiteren Trägermaterial 16' verbunden. Dabei werden das weitere Blech 14' und das weitere Trägermaterial 16' mittels einer weiteren Zuführungseinheit 18' und einer weiteren Verbindungseinheit 20' verbunden. Im Anschluss wird das weitere Blech 14' zusammen mit dem damit verbundenen weiteren Trägermaterial 16' in einer Blechverbindungseinheit 21 mit dem klebstofffilmbehafteten Blech 14 zu einem Mehrfachblech verbunden. Die Blechverbindungseinheit 21 umfasst im dargestellten Ausführungsbeispiel ebenfalls einen Kalander 23 mit entsprechenden Wellen und Walzen.

Nach Ablösen des weiteren Trägermaterials 16' mittels der weiteren Ablöseeinheit 24' wird das Mehrfachblech in einer Stanzeinheit 26 in eine vordefinierte Blechform gestanzt. Die Stanzeinheit 26 umfasst im dargestellten Ausführungsbeispiel ein Stanzfolgewerkzeug 28. Im Anschluss wird der Klebstofffilm auf der Blechform mittels einer Aktivierungseinheit 30 aktiviert. In einer Presseeinheit 32 erfolgt dann eine Verbindung mehrerer der ausgestanzten Blechformen zu einem Blechpaket 33 durch Verpressen und vorzugsweise ein Überführen des Klebstofffilms in einen duromeren-festen Zustand.

Die vorliegende Erfindung basiert insbesondere darauf, dass keine Beschichtung eines Blechs erfolgen muss, beispielsweise durch Auftrag eines Klebstoffs als wässrige Dispersion. Stattdessen wird der Klebstoff auf einem Trägermaterial (auch als Liner bezeichnet, beispielsweise Trennpapier) appliziert und anschließend als Schmelzklebstoff auf das Blech aufgebracht. Der Liner verbleibt zunächst auf dem Klebstofffilm.

Der Klebstofffilm umfasst insbesondere einen Schmelzklebstoff, der zusätzlich additiviert sein kann. Er kann Partikel enthalten, die für ein rasches Aufschmelzen Strahlung absorbieren können (zum Beispiel im Infrarotbereich). Darüber hinaus kann der Schmelzklebstoff auch (beispielsweise thermisch oder durch UV-Strahlung) reaktiv formuliert sein und für ein schnelles Nachvernetzen zusätzlich Beschleuniger enthalten. Eine Aktivierung ist dabei insbesondere notwendig, um duroplastische Eigenschaften des verfestigten Klebstofffilms zu erzielen. In diesem Zusammenhang können auch Vitrimer-ähnliche Eigenschaften erzielt werden, also ein kovalentes Netzwerk ausgebildet, bzw. in seiner Topologie durch thermisch aktivierte Bindungsaustauschreaktionen verändert werden.

Zur Beschichtung der Blechware wird der Klebstofffilm (bzw. die Klebstofffolie), die sich auf dem Liner befindet, über eine Aktivierungseinheit (beispielsweise eine Laserdiodenzeile oder auch eine beheizte Kalanderwelle) geführt und dann mittels einer Rolle mit dem Blech verbunden. Aufgrund des Trägermaterials kommt es beim Klebstoffauftrag nicht zu einer Verschmutzung der Wellen durch Anhaften des Klebstofffilms. Zudem erhöht das Trägermaterial die Stabilität des sehr dünnen Klebstofffilms. Bei reaktiven Klebstofffilmen kann die Aktivierung der Vernetzungsreaktion ebenfalls in diesem Schritt erfolgen oder erst nach dem Beschichten des Elektroblechs.

Wenn ein Zwei- oder Mehrblechverbund (Sandwich) erzeugt werden soll, werden zuerst zwei Bleche mit einem Klebstofffilm verbunden (vergleiche Figur 1). Hierbei wird das Trägermaterial des obersten beziehungsweise untersten Verbundes abgezogen und beide Bleche durch Verpressen verklebt. Das Trägermaterial des untersten beziehungsweise obersten Blechs verbleibt, bis der Sandwichverbund in das Stanzwerkzeug einläuft. Erst unmittelbar vor dem Stanzfolgewerkzeug oder dem Verbinden mit einem weiteren Blech wird das Trägermaterial abgezogen.

In Figur 1 ist in diesem Zusammenhang durch die eckigen Klammern angedeutet, dass dabei mehrere weitere Bleche 14' beziehungsweise mehrere weitere Trägermaterialien 16' verbunden werden können. Beispielsweise kann ein Mehrfachblech aus drei bis fünf Blechen erzeugt werden. Es ist aber auch möglich, dass der erfindungsgemäße Ansatz mit einem einzelnen Blech verwendet wird.

In dieser Weise ist eine Erzeugung von Mehrfachblechverbindungen möglich, die unmittelbar anschließend als Verbund in das Stanzfolgewerkzeug beziehungsweise die Stanzfolgepresse eingefahren werden können. Da die Klebstoffapplikation erst kurz vor der Stanze erfolgt, können Coil und Klebstoff separat flexibel eingesetzt werden. Dadurch ist es möglich, unterschiedliche Blechwerkstoffe (zum Beispiel beschichtete Bleche mit etablierten Isolations- und Korrosionsschichten) zu verwenden. Insbesondere kann eine Herstellerunabhängigkeit erreicht werden. Weiterhin müssen keine mit Klebstoff beschichteten Coils im latent reaktiven Zustand gelagert oder transportiert werden. Dies ist wesentlich, da Coils gegenüber dem Klebstoff ein erheblich höheres Gewicht aufweisen und aufgrund der separaten Lagerung und Transport die gegebenenfalls notwendige Kühlung des Klebstofffilms entfallen kann, wodurch die Energieeffizienz gesteigert werden kann.

Nachteilig an anderen Technologien, die vorbeschichtete Coils verwenden, ist zudem, dass es durch den hohen Druck, der auf die latent reaktive Klebstoffbeschichtung einwirkt, zu einem frühzeitigen Aushärten des Klebstoffs kommen kann oder sich die Klebrigkeit erhöhen kann, was das Abwickeln erschweren kann. Dies führt zu erheblichen Beeinträchtigungen des Prozesses. Weiterhin kann der beschriebene Ansatz die Applikation verschiedener Klebstoffe beziehungsweise verschiedener Klebstoffchemien ermöglichen. Bei Mehrfachblechen ist es auch möglich, in den einzelnen Schichten unterschiedliche Klebstoffe beziehungsweise Klebstoffchemien einzusetzen.

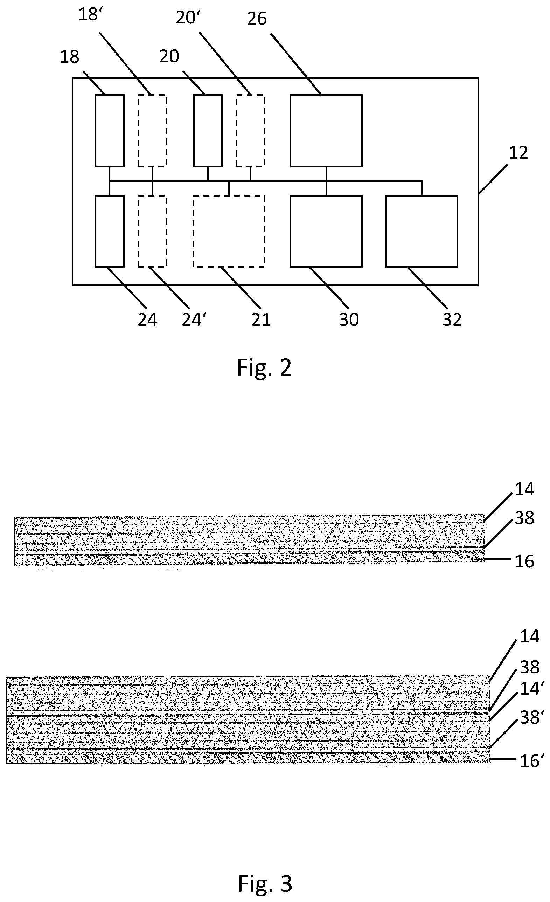

In der Figur 2 ist schematisch eine erfindungsgemäße Vorrichtung 12 zum Verbinden von Blechen dargestellt. Die Vorrichtung umfasst eine Zuführungseinheit 18, eine Verbindungseinheit 20, eine Ablöseeinheit 24, eine Stanzeinheit 26, eine Aktivierungseinheit 30 sowie eine Presseinheit 32. Zudem umfasst die Vorrichtung 12 optional eine weitere Zuführungseinheit 18' und eine weitere Verbindungseinheit 20' sowie eine Blechverbindungseinheit 21 und eine weitere Ablöseeinheit 24'. Die verschiedenen Einheiten können einzeln oder kombiniert ausgeführt sein. Insbesondere kann eine kombinierte Einheit die Funktionen von zwei oder mehr der beschriebenen Einheiten vereinen beziehungsweise erfüllen.

Die erfindungsgemäße Vorrichtung 12 beziehungsweise das erfindungsgemäße System 10 können insbesondere in der Fertigung von Blechpaketen für Statoren oder Rotoren eines Elektromotors eingesetzt werden. Hierbei ergeben sich Einsparpotenziale sowie ein Gewinn an Flexibilität.

Die Zuführungseinheit 18 bzw. die weitere Zuführungseinheit 18' können insoweit insbesondere dazu geeignet sein, ein Elektroblech für ein Rotor- und/oder Startorblechpaket eines Elektromotors zuzuführen. Ein derartiges Elektroblech kann insbesondere über eine Blechrolle mit gewickeltem Blech empfangen werden. Insbesondere kann die Zuführungseinheit 18 dabei eine entsprechende Aufnahme umfassen und zum Aufnehmen einer Rolle ausgebildet sein. Weiterhin vorteilhaft ist es, dass die Zuführungseinheit eine zweite Aufnahme für eine Trägerrolle mit gewickelten Trägermaterial mit voraufgebrachtem Klebstoff umfasst. Insoweit kann auch das Trägermaterial in gewickelter Form beziehungsweise in Rollenform empfangen werden.

Das Trägermaterial beziehungsweise der Träger oder auch Liner fungiert als Trennschicht. Der Klebstoff darf nicht (dauerhaft) auf dem Trägermaterial haften, sondern verbleibt auf dem Blech nach dem Verbinden in der Verbindungseinheit. Als Trägermaterial können dabei beispielsweise Papiere mit einer Silikonbeschichtung zum Einsatz kommen. Sofern diese nicht ausreichend fest sind und im Prozess reißen, ist es auch möglich, niederenergetische und gegebenenfalls verstärkte Kunststofffolien (beispielsweise mit textilem Träger) oder entsprechend beschichtete Mehrmetallfolien einzusetzen.

Auf das Trägermaterial können die Klebstoffe gewalzt, gerakelt oder gesprüht werden. Die Verflüssigung für diese erste Verarbeitung kann durch Aufschmelzen, Dispergieren oder Lösung erfolgen. Nach Erstarren oder Abdampfen bildet der Klebstoff eine zunächst thermoplastisch fest-trockene, das heißt nicht haftende Beschichtung. Die Applikation des Klebstoffs auf das Trägermaterial ist dabei in unterschiedlichen Formen möglich.

Der Klebstoff wird im Prozessverlauf vom Trägermaterial auf das Elektroblech übertragen. Damit dieser auf dem Blech haftet, muss der Klebstoff so gestaltet sein, dass er von einer festen Form (thermoplastisch-fester Zustand) in einen klebrigen oder haftenden Zustand (thermoplastisch-haftender Zustand) überführt werden kann. In diesem Stadium ist der Klebstofffilm noch aufschmelzbar, wie es bei thermoplastischen Kunststoffen in der Regel der Fall ist, und insoweit sozusagen noch den thermoplastischen Kunststoffen zuzuordnen. Die bei Elektromotoren geforderte hohen Temperatur- und Medienbeständigkeiten können allerdings zumeist nur durch duromere Kunststoffe erreicht werden. Daher wird insbesondere ein Klebstoffsystem eingesetzt, das so aktiviert werden kann, dass es erneut klebrig wird, es aber auch zu einer chemischen Vernetzung beziehungsweise Aushärtung zum Duromer kommt (duromer-fester Zustand). Nach vollständiger Aushärtung weist der Klebstoff dann die geforderten Eigenschaften hinsichtlich hoher Endfestigkeit auf. Insbesondere kann als Klebstoff ein nachvernetzendes beziehungsweise latent härtendes oder reagierendes System zum Einsatz kommen. Beispielsweise können Epoxidharze eingesetzt werden. Alternativ können Phenole, Polyester, Acrylate (gegebenenfalls sogar im No-Mix-Verfahren mit separater Beschichtung von Ober- und Unterseite hergestellte Systeme), Urethane/Harnstoffe und Bismaleimide eingesetzt werden. Die Nachvernetzung kann thermisch (beispielsweise durch MIR-Bestrahlung) oder auch photoinitiiert durch Bestrahlung im Sichtbaren oder UV-Bereich erfolgen. Dabei ist unter einer Nachvernetzung insbesondere zu verstehen, dass es sich anschließend um ein Duromer handelt. Es wäre aber - beispielsweise bei Acrylaten - auch vorstellbar, dass diese dann erst beginnen auszuhärten (und thermoplastisch sind/bleiben).

Die Verbindungseinheit 20 beziehungsweise die weitere Verbindungseinheit 20' kann insbesondere eine Kalanderpresse umfassen. Dabei kann ein Überführen des Klebstofffilms von einem ursprünglichen thermoplastisch-festen Zustand in einen thermoplastisch-klebrigen oder haftenden Zustand durch Ausüben eines Drucks oder auch durch eine direkte Wärmeapplikation erfolgen. Hierzu kann beispielsweise ein Kalander mit einer beheizbaren Walze beziehungsweise Welle verwendet werden. Ebenfalls kann eine separate Erwärmungseinheit, beispielsweise ein Heizdraht oder ähnliches, vorgesehen sein, um die notwendige Erwärmung zu ermöglichen.

Die Blechverbindungseinheit 21 dient zum Verbinden des klebstofffilmbehafteten Blechs mit dem weiteren Blech. Hierzu kann die Blechverbindungseinheit 21 insbesondere ebenfalls einen Kalander mit entsprechenden Wellen und Walzen umfassen.

Die Ablöseeinheit 24 sowie auch die weitere Ablöseeinheit 24' dienen zum Ablösen des Trägermaterials von dem Blech. Insbesondere ist es hierzu vorzugsweise lediglich erforderlich, das Trägermaterial von dem Blech abzuziehen, da die Klebstoffchemie des Klebstofffilms entsprechend gewählt ist, sodass der Klebstoff auf dem Blech verbleibt, insbesondere sofern zuvor ein entsprechender Pressdruck ausgeübt wurde. Die Ablöseeinheit 24 beziehungsweise die weitere Ablöseeinheit 24' kann soweit insbesondere als mechanisches Bauteil verstanden werden, durch das das Trägermaterial nach Durchlaufen der Verbindungseinheit 20 vom Blech und dem darauf verbleibenden Klebstofffilm weggeführt oder entfernt wird.

Die Stanzeinheit 26 dient zum Stanzen des klebstofffilmbehafteten Blechs beziehungsweise des Mehrfachblechs. Die Stanzeinheit kann dabei wie zuvor beschrieben beispielsweise ein Stanzfolgewerkzeug umfassen, das in mehreren Schritten ein Stanzen in eine entsprechende Form eines Statorblechs oder eines Rotorbleches ermöglicht.

In der Aktivierungseinheit 30 wird im Nachgang dazu der Klebstofffilm auf der gestanzten Blechform aktiviert. Hierzu kann die Aktivierungseinheit 30 beispielsweise eine Einheit zum Erwärmen des Klebstofffilms umfassen. Insbesondere kann direkt vor der Presseinheit 32 ein Infrarotstrahler oder auch eine Heißlufteinheit als Aktivierungseinheit 30 vorgesehen sein. Ebenfalls ist es möglich, dass ein Aktivieren des Klebstofffilms durch Licht, insbesondere durch UV-Licht, erfolgt.

Zuletzt werden in der Presseeinheit 32 mehrere Blechformen durch einen Pressvorgang verbunden, wobei die Presseeinheit 32 insbesondere eine hydraulische Presse umfassen kann.

In der Figur 3 ist oben schematisch ein Blech 14 dargestellt, das mittels eines Klebstofffilms 38 mit einem Trägermaterial 16 verbunden ist (oben). Weiterhin ist in Figur 3 unten ein Mehrfachblech dargestellt, das im dargestellten Ausführungsbeispiel ein Blech 14, einen Klebstofffilm 38, ein weiteres Blech 14', einen weiteren Klebstofffilm 38' sowie ein weiteres Trägermaterial 16' umfasst.

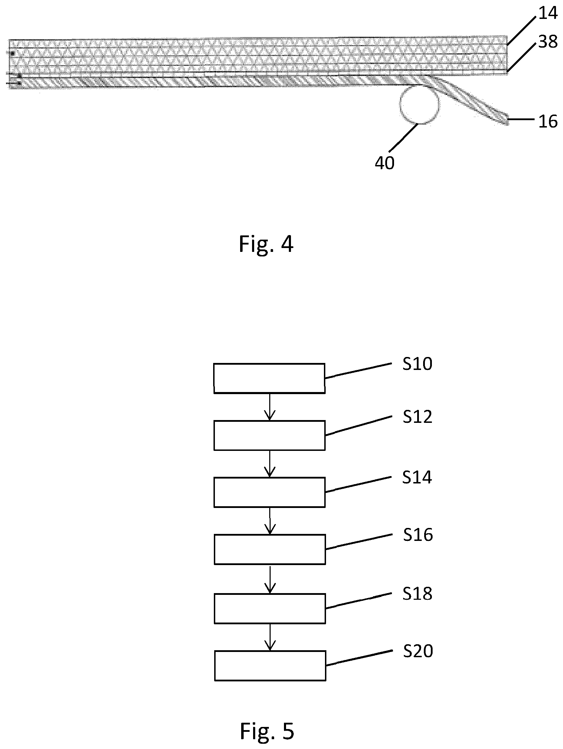

In Figur 4 ist schematisch dargestellt, dass das Trägermaterial 16 durch eine Welle 40, die insbesondere der Ablöseeinheit entsprechen kann, von dem Blech 14 und dem darauf verbleibenden Klebstofffilm 38 entfernt wird.

In der Figur 5 ist schematisch ein erfindungsgemäßes Verfahren zum Verbinden von Blechen dargestellt. Das Verfahren umfasst Schritte des Zuführens S10 eines Blechs und eines Trägermaterials, des Verbindens S12 des Blechs mit dem Trägermaterial, des Ablösens S14 des Trägermaterials von dem Blech, des Stanzens S16 des klebstofffilmbehafteten Blechs, des Aktivierens S18 des Klebstofffilms auf der Blechform und Verbindens S20 mehrerer Blechformen. Das Verfahren kann insbesondere als Betriebsverfahren für eine Fertigungsanlage für Rotor- und Statorbleckpakete eingesetzt werden.

## Patentansprüche

1. Vorrichtung (12) zum Verbinden von Blechen (14), mit:
einer Zuführungseinheit (18) zum Zuführen eines Blechs und eines Trägermaterials (16) mit einem voraufgebrachten Klebstofffilm (38) in einem thermoplastisch-festen Zustand;
einer Verbindungseinheit (20) zum Verbinden des Blechs mit dem Trägermaterial mittels des Klebstofffilms durch Überführen des Klebstofffilms in einen thermoplastisch-haftenden Zustand und Aufpressen des Trägermaterials und des Klebstofffilms auf das Blech;
einer Ablöseeinheit (24) zum Ablösen des Trägermaterials von dem Blech, wobei der Klebstofffilm auf dem Blech in einem thermoplastisch-festen Zustand verbleibt;
einer Stanzeinheit (26) zum Stanzen des klebstofffilmbehafteten Blechs in eine vordefinierte Blechform;
einer Aktivierungseinheit (30) zum Aktivieren des Klebstofffilms auf der Blechform; und
einer Presseinheit (32) zum Verbinden mehrerer Blechformen zum Herstellen eines Blechpakets (33) durch Verpressen.

2. Vorrichtung (12) nach Anspruch 1, wobei die Presseinheit (32) zum Herstellen des Blechpakets (33) durch Verpressen und Überführen des Klebstofffilms (38) in einen duromeren-festen Zustand ausgebildet ist.

3. Vorrichtung (12) nach einem der vorstehenden Ansprüche, mit:
einer weiteren Zuführungseinheit (18') und einer weiteren Verbindungseinheit (20') zum Zuführen und Verbinden eines weiteren Blechs und eines weiteren Trägermaterials (16') mit einem voraufgebrachten weiteren Klebstofffilm (38');
einer Blechverbindungseinheit (21) zum Verbinden des klebstofffilmbehafteten Blechs (14) mit dem weiteren Blech und dem damit verbundenen weiteren Trägermaterial mittels des weiteren Klebstofffilms zu einem Mehrfachblech; und
einer weiteren Ablöseeinheit (24') zum Ablösen des weiteren Trägermaterials von dem Mehrfachblech, wobei der weitere Klebstofffilm in einem thermoplastisch-festen Zustand auf dem Mehrfachblech verbleibt, wobei
die Stanzeinheit (26) zum Stanzen des klebstofffilmbehafteten Mehrfachblechs in die vordefinierte Blechform ausgebildet ist.

4. Vorrichtung (12) nach einem der vorstehenden Ansprüche, wobei die Verbindungseinheit (20) einen Kalander (22), vorzugsweise einen Kalander mit beheizbarer Walze, und/oder eine Erwärmungseinheit zum Erwärmen des Klebstofffilms (38) umfasst.

5. Vorrichtung (12) nach einem der vorstehenden Ansprüche, wobei die Verbindungseinheit (20) zum Verbinden des Blechs (14) mit dem Trägermaterial (16) durch Erwärmen des Klebstofffilms (38) auf eine Temperatur, die unterhalb einer Aktivierungstemperatur des Klebstofffilms liegt, ausgebildet ist.

6. Vorrichtung (12) nach einem der vorstehenden Ansprüche, wobei
die Stanzeinheit (26) zum Stanzen des klebstofffilmbehafteten Blechs (14) oder des klebstofffilmbehafteten Mehrfachblechs in eine Form eines Statorblechs oder eines Rotorblechs ausgebildet ist; und
die Presseinheit (32) zum Verbinden mehrerer Blechformen zu einem Rotor- und/oder Statorblechpaket für einen Elektromotor ausgebildet ist.

7. Vorrichtung (12) nach einem der vorstehenden Ansprüche, wobei die Aktivierungseinheit (30)
zum Aktivieren des Klebstofffilms (38) durch Erwärmen, insbesondere durch Infrarotstrahlung, Induktion, Heißluft, resistive Erwärmung, Mikrowellen oder dielektrische Erwärmung; und/oder
zum Aktivieren des Klebstofffilms durch Licht, insbesondere UV-Licht bzw. Infrarotlicht, oder Laserstrahlung ausgebildet ist.

8. Vorrichtung (12) nach einem der vorstehenden Ansprüche, wobei die Stanzeinheit (26) ein Stanzfolgewerkzeug (28) zum Stanzen des klebstofffilmbehafteten Blechs (14) oder des klebstofffilmbehafteten Mehrfachblechs in mehreren Schritten umfasst.

9. Vorrichtung (12) nach einem der vorstehenden Ansprüche, wobei die Zuführungseinheit (18) und/oder die weitere Zuführungseinheit (18')
eine erste Aufnahme für eine Blechrolle mit gewickeltem Blech (14) umfasst; und/oder
eine zweite Aufnahme für eine Trägerrolle mit gewickeltem Trägermaterial (16) mit voraufgebrachtem Klebstofffilm (38) umfasst.

10. Vorrichtung (12) nach einem der vorstehenden Ansprüche, wobei die Zuführungseinheit (18) und/oder die weitere Zuführungseinheit (18') zum Zuführen eines Papiers mit Silikonbeschichtung, einer Kunststofffolie, insbesondere einer textilverstärkten Kunststofffolie, oder einer Metallfolie, insbesondere einer silikonisierten Metallfolie, als Trägermaterial (16) ausgebildet ist.

11. Vorrichtung (12) nach einem der vorstehenden Ansprüche, wobei die Zuführungseinheit (18) und/oder die weitere Zuführungseinheit (18') zum Zuführen eines Trägermaterials (16) mit einem Klebstofffilm (38) aus nachvernetzendem und/oder latent härtendem Klebstoff, insbesondere einem Epoxidharz, ausgebildet ist.

12. Vorrichtung (12) nach einem der vorstehenden Ansprüche, wobei die Zuführungseinheit (18) und/oder die weitere Zuführungseinheit (18') zum Zuführen eines Elektroblechs für ein Rotor- und/oder Statorbleckpaket eines Elektromotors ausgebildet ist.

13. System (10) zum Verbinden von Blechen (14), mit einer Vorrichtung (12) nach einem der vorstehenden Ansprüche, einem Blech und einem Trägermaterial (16) mit einem voraufgebrachten Klebstofffilm (38).

14. Verfahren zum Verbinden von Blechen (14), mit den Schritten:
Zuführen (S10) eines Blechs und eines Trägermaterials (16) mit einem voraufgebrachten Klebstofffilm (38) in einem thermoplastisch-festen Zustand;
Verbinden (S12) des Blechs mit dem Trägermaterial mittels des Klebstofffilms durch Überführen des Klebstofffilms in einen thermoplastisch-haftenden Zustand und Aufpressen des Trägermaterials und des Klebstofffilms auf das Blech;
Ablösen (S14) des Trägermaterials von dem Blech, wobei der Klebstofffilm auf dem Blech in einem thermoplastisch-festen Zustand verbleibt;
Stanzen (S16) des klebstofffilmbehafteten Blechs in eine vordefinierte Blechform;
Aktivieren (S18) des Klebstofffilms auf der Blechform; und
Verbinden (S20) mehrerer Blechformen zum Herstellen eines Blechpakets (33) durch Verpressen.

## Claims

1. Apparatus (12) for connecting metal sheets (14), comprising:
a feed unit (18) for feeding a metal sheet and a carrier material (16) with a pre-applied adhesive film (38) in a thermoplastic-solid state;
a connection unit (20) for connecting the metal sheet to the carrier material by means of the adhesive film by transforming the adhesive film into a thermoplastic-adhesive state and pressing the carrier material and the adhesive film onto the metal sheet;
a detachment unit (24) for detaching the carrier material from the metal sheet, wherein the adhesive film on the metal sheet remains in a thermoplastic-solid state;
a punching unit (26) for punching the adhesive film-coated metal sheet into a predefined metal sheet shape;
an activation unit (30) for activating the adhesive film on the metal sheet shape; and
a pressing unit (32) for connecting multiple metal sheet shapes to produce a metal sheet package (33) by pressing.

2. Apparatus (12) according to claim 1, wherein the pressing unit (32) is designed to produce the metal sheet package (33) by pressing and transforming the adhesive film (38) into a thermoset-solid state.

3. Apparatus (12) according to one of the preceding claims, comprising:
a further feed unit (18') and a further connection unit (20') for feeding and connecting a further metal sheet and a further carrier material (16') with a pre-applied further adhesive film (38');
a metal sheet connection unit (21) for connecting the adhesive film-coated metal sheet (14) to the further metal sheet and the further carrier material connected thereto by means of the further adhesive film to form a multi-metal sheet; and
a further detachment unit (24') for detaching the further carrier material from the multi-metal sheet, the further adhesive film remaining in a thermoplastic-solid state on the multi-metal sheet, wherein
the punching unit (26) is designed to punch the adhesive film-coated multi-metal sheet into the predefined metal sheet shape.

4. Apparatus (12) according to one of the preceding claims, wherein the connection unit (20) comprises a calender (22), preferably a calender with a heatable roller, and/or a heating unit for heating the adhesive film (38).

5. Apparatus (12) according to one of the preceding claims, wherein the connection unit (20) is designed to connect the metal sheet (14) to the carrier material (16) by heating the adhesive film (38) to a temperature which is below an activation temperature of the adhesive film.

6. Apparatus (12) according to one of the preceding claims, wherein
the punching unit (26) is designed to punch the adhesive film-coated metal sheet (14) or the adhesive film-coated multi-metal sheet into a shape of a stator metal sheet or a rotor metal sheet; and
the pressing unit (32) is designed to connect multiple metal sheet shapes to a rotor- and/or stator-metal sheet package for an electric motor.

7. Apparatus (12) according to one of the preceding claims, wherein the activation unit (30)
is designed to activate the adhesive film (38) by heating, in particular by infrared radiation, induction, hot air, resistive heating, microwaves or dielectric heating; and/or
to activate the adhesive film by light, in particular UV light or infrared light, or laser radiation.

8. Apparatus (12) according to one of the preceding claims, wherein the punching unit (26) comprises a punching follow-on tool (28) for punching the adhesive film-coated metal sheet (14) or the adhesive film-coated multi-metal sheet- in several steps.

9. Apparatus (12) according to one of the preceding claims, wherein the feed unit (18) and/or the further feed unit (18')
comprises a first receptacle for a steel roll with a wound metal sheet (14); and/or
a second receptacle for a carrier roll with wound carrier material (16) with a pre-applied adhesive film (38).

10. Apparatus (12) according to one of the preceding claims, wherein the feed unit (18) and/or the further feed unit (18') is designed to feed a paper with silicone coating, a plastic film, in particular a textile-reinforced plastic film, or a metal foil, in particular a siliconized metal foil, as carrier material (16).

11. Apparatus (12) according to one of the preceding claims, wherein the feed unit (18) and/or the further feed uniting (18') is designed to feed a carrier material (16) with an adhesive film (38) of post-crosslinking and/or latent-curing adhesive, in particular an epoxy resin.

12. Apparatus (12) according to one of the preceding claims, wherein the feed unit (18) and/or the further feed unit (18') is designed to feed an electrical metal sheet for a rotor- and/or stator-metal sheet package of an electric motor.

13. System (10) for connecting metal sheets (14), comprising an apparatus (12) according to one of the preceding claims, a metal sheet and a carrier material (16) with a pre-applied adhesive film (38).

14. Method for connecting metal sheets (14), comprising the steps of:
feeding (S10) a metal sheet and a carrier material (16) with a pre-applied adhesive film (38) in a thermoplastic-solid state;
connecting (S12) the metal sheet to the carrier material by means of the adhesive film by transforming the adhesive film to a thermoplastic-adhesive state and pressing the carrier material and the adhesive film onto the metal sheet;
detaching (S14) the carrier material from the metal sheet, whereby the adhesive film remains on the metal sheet in a thermoplastic-solid state;
punching (S16) the adhesive film-coated metal sheet into a predefined metal sheet shape;
activating (S18) the adhesive film on the metal sheet shape; and
connecting (S20) multiple metal sheet shapes to produce a metal sheet package (33) by pressing.

## Revendications

1. Dispositif (12), destiné à assembler des tôles (14), doté :
d'une unité d'amenage (18), destinée à amener une tôle et une matière de support (16) dotée d'un film (38) d'agent adhésif pré-appliqué dans un état thermoplastique solide ;
d'une unité d'assemblage (20), destiné à assembler la tôle avec la matière de support, au moyen du film d'agent adhésif, par transfert du film d'agent adhésif dans un état thermoplastique adhérent et par pressage de la matière de support et du film d'agent adhésif sur la tôle ;
d'une unité de désolidarisation (24), destinée à désolidariser la matière de support de la tôle, le film d'agent adhésif restant sur la tôle dans un état thermoplastique solide ;
d'une unité d'estampage (26), destinée à estamper la tôle munie de l'agent adhésif dans une forme de tôle ;
d'une unité d'activation (30), destinée à activer le film d'agent adhésif sur la forme de tôle ; et
d'une unité de pressage (32), destinée à assembler plusieurs formes de tôle, pour créer un paquet de tôles (33) par compression.

2. Dispositif (12) selon la revendication 1, l'unité de pressage (32) étant conçue pour créer le paquet de tôles (33) par compression et transfert du film d'agent adhésif (38) dans un état duromère solide.

3. Dispositif (12) selon l'une quelconque des revendications précédentes, doté :
d'une unité d'amenage (18') supplémentaire et d'une unité d'assemblage (20') supplémentaire, destinées à amener et à assembler une tôle supplémentaire et une matière de support (16') supplémentaire, dotée d'un film d'agent adhésif (38') pré-appliqué supplémentaire ;
d'une unité d'assemblage (21) de tôles, destinée à assembler la tôle (14) munie de l'agent adhésif avec la tôle supplémentaire et la matière de support supplémentaire assemblée avec celle-ci au moyen du film d'agent adhésif supplémentaire en une tôle multiple ; et
d'une unité de désolidarisation (24'), destinée à désolidariser la matière de support supplémentaire de la tôle multiple, le film d'agent adhésif supplémentaire restant dans un état thermoplastique solide sur la tôle multiple,
l'unité d'estampage (26) étant conçue pour estamper la tôle multiple munie de l'agent adhésif dans la forme de tôle prédéfinie.

4. Dispositif (12) selon l'une quelconque des revendications précédentes, l'unité d'assemblage (20) comprenant une calandre (22), de préférence une calandre dotée d'un cylindre susceptible d'être chauffé et/ou une unité de chauffage, destinée à chauffer le film d'agent adhésif (38).

5. Dispositif (12) selon l'une quelconque des revendications précédentes, l'unité d'assemblage (20) étant conçue pour assembler la tôle (14) avec la matière de support (16) en chauffant le film d'agent adhésif (38) à une température qui est inférieure à une température d'activation du film d'agent adhésif.

6. Dispositif (12) selon l'une quelconque des revendications précédentes,
l'unité d'estampage (26) étant conçue pour estamper la tôle (14) munie de l'agent adhésif ou la tôle multiple munie de l'agent adhésif dans une forme d'une tôle statorique ou d'une tôle rotorique ; et
l'unité de pressage (32) étant conçue pour assembler plusieurs formes de tôle en un paquet de tôles rotoriques et/ou statoriques, destiné à un moteur électrique.

7. Dispositif (12) selon l'une quelconque des revendications précédentes, l'unité d'activation (30) étant conçue
pour activer le film d'agent adhésif (38) en le chauffant, notamment par rayonnement infrarouge, par induction, par air chaud, par chauffage résistif, par micro-ondes ou par chauffage diélectrique ; et/ou
pour activer le film d'agent adhésif par lumière, notamment par lumière UV ou par lumière infrarouge ou par rayonnement laser.

8. Dispositif (12) selon l'une quelconque des revendications précédentes, l'unité d'estampage (26) comprenant un outil d'estampage (28) de progression, destiné à estamper la tôle (14) munie de l'agent adhésif ou la tôle multiple munie de l'agent adhésif en plusieurs étapes.

9. Dispositif (12) selon l'une quelconque des revendications précédentes, l'unité d'amenage (18) et/ou l'unité d'amenage (18') supplémentaire
comprenant un premier logement pour un rouleau de tôle avec de la tôle (14) enroulée et/ou
comprenant un deuxième logement, pour un rouleau de support, avec de la matière de support (16) enroulée, dotée d'un film d'agent adhésif (38) pré-appliqué.

10. Dispositif (12) selon l'une quelconque des revendications précédentes, l'unité d'amenage (18) et/ou l'unité d'amenage (18') supplémentaire étant conçue pour amener un papier doté d'un revêtement en silicone, un film en matière plastique, notamment un film en matière plastique renforcé par textile ou un film métallique, notamment d'un film métallique siliconé, en tant que matière de support (16).

11. Dispositif (12) selon l'une quelconque des revendications précédentes, l'unité d'amenage (18) et/ou l'unité d'amenage (18') supplémentaire étant conçue pour amener une matière de support (16) dotée d'un film d'agent adhésif (38) en un agent adhésif post-réticulé et/ou à durcissement latent, notamment en une résine époxy.

12. Dispositif (12) selon l'une quelconque des revendications précédentes, l'unité d'amenage (18) et/ou l'unité d'amenage (18') supplémentaire étant conçue pour amener une tôle électrique, destinée à un paquet de tôles rotoriques et/ou statoriques d'un moteur électrique.

13. Système (10), destiné à assembler des tôles (14), à l'aide d'un dispositif (12) selon l'une quelconque des revendications précédentes, d'une tôle et d'une matière de support (16) dotée d'un film d'agent adhésif (38) pré-appliqué.

14. Procédé, destiné à assembler des tôles (14), avec les étapes, consistant à :
amener (S10) une tôle et une matière de support (16) dotée d'un film d'agent adhésif (38) pré-appliqué dans un état thermoplastique solide ;
assembler (S12) la tôle avec la matière de support au moyen du film d'agent adhésif, en transférant le film d'agent adhésif dans un état thermoplastique adhérent et presser la matière de support et le film d'agent adhésif sur la tôle ;
désolidariser (S14) la matière de support de la tôle, le film d'agent adhésif restant sur la tôle dans un état thermoplastique solide ;
estamper (S16) la tôle munie de l'agent adhésif dans une forme de tôle prédéfinie ;
activer (S18) le film d'agent adhésif sur la forme de tôle ; et
assembler (S20) plusieurs formes de tôle pour créer un paquet de tôles (33) par compression.
